# EUROPÄISCHE PATENTSCHRIFT

(11) **EP 1 605 368 B1**
(45) Veröffentlichungstag und Bekanntmachung des Hinweises auf die Patenterteilung: **19.09.2012**
(21) Anmeldenummer: 04011807.7
(22) Anmeldetag: 18.05.2004
(51) Int. Cl.: G06F 17/30

(54) **Erstellen elektronisch verarbeitbarer Unterschriftendateien**
Generation of electronical signature files
Génération des fichiers electroniques de signatures

(43) Veröffentlichungstag der Anmeldung: 14.12.2005
(73) Patentinhaber: UBS AG, 8001 Zürich (CH)
(72) Erfinder: Fischer, Hans-Peter, 8525 Niederneunforn (CH)
(74) Vertreter: Röthinger, Rainer

(56) Entgegenhaltungen:
- EP-A- 0 950 992
- WO-A-00/31677
- WO-A-02/091145
- WO-A1-01/41051
- US-A- 5 490 217
- US-A- 5 647 017
- US-A1- 2002 075 514
- US-A1- 2003 218 061
- US-A1- 2003 233 557

## Beschreibung

### Technisches Gebiet

Die Erfindung betrifft das Gebiet der elektronischen Verarbeitung persönlicher Identifikationsmerkmale. Genauer gesagt betrifft die Erfindung Aspekte im Zusammenhang mit dem Überführen von Dokumenten in Papierform, die eine persönliche Unterschrift tragen, in eine elektronisch verarbeitbare Form.

### Hintergrund der Erfindung

Handschriftliche Unterschriften sind ein wichtiges persönliches Identifikationsmerkmal. Trotz des Einzugs der Informationstechnologie und der damit in Zusammenhang stehenden Entwicklung elektronischer Identifikationsmerkmale (wie persönlicher Schlüssel für kryptologische Zwecke) sind handschriftliche Unterschriften nach wie vor in vielen Bereichen des alltäglichen Lebens aufgrund ihrer Aussagekraft und ihrer einfachen Anwendungsweise unerlässlich. So müssen beispielsweise bis heute selbst computergestützt erzeugte Urkunden wie Kreditkartenbelege oder Schecks als Indiz für deren Echtheit (oder Authentizität) noch persönlich unterschrieben werden.

Häufig besteht das Erfordernis, handschriftliche Unterschriften auf ihre Authentizität hin überprüfen zu müssen. Zu diesem Zweck wird die zu überprüfende persönliche Unterschrift mit einer in der Regel vorher hinterlegten Unterschrift derselben Person verglichen. Es liegt auf der Hand, dass bei einem großen Personenkreis, der für das Leisten einer Unterschrift in Frage kommt, entsprechend viele Unterschriften zentral hinterlegt werden müssen. Bei großen Unternehmen wie bei Banken geschieht dies in so genannten Unterschriftsverzeichnissen. Ein anderes Beispiel für die zentrale Hinterlegung von Unterschriften sind öffentlich zugängliche Register, beispielsweise die Handelsregister.

Um einen automatisierten Unterschriftenvergleich zu ermöglichen, aber auch für viele andere computergestützte Anwendungen, ist es erforderlich, persönliche Unterschriften in einer elektronisch verarbeitbaren Form, beispielsweise als Unterschriftsdatei, zu hinterlegen. Der einzelne zu überprüfende Scheck kann problemlos manuell eingescannt und bearbeitet werden, um die darauf enthaltene Unterschrift in eine elektronisch verarbeitbare Form zu überführen. Diese Vorhergehensweise ist jedoch bei der Erstellung umfangreicher Unterschriftenverzeichnisse oder Register, welche die Grundlage für den Unterschriftenvergleich bilden, wenig effektiv. Der Grund hierfür ist vor allem, dass die erforderlichen manuellen Arbeiten mit einem hohen Zeitaufwand verbunden und darüber hinaus äußerst fehleranfällig sind.

Die US 5,490,417 offenbart im Zusammenhang mit Dokumenten in Papierform die Verwendung eines zweidimensionalen Bildcodes. Es wird gemäß einer Ausführungsform vorgeschlagen, einen Personalausweis, der neben einem Foto des Besitzers auch dessen Unterschrift trägt, mit einem zweidimensionalen Bildcode zu versehen, wobei dieser Code (ggf. auch in verschlüsselter Form) Informationen über das Passfoto und die Unterschrift beinhaltet.

In der US 2003/0218061 A1 wird eine Technik zum Verifizieren einer Unterschrift auf einem Bankscheck beschrieben. Hierbei wird der Bankscheck bzw. die Scheckunterschrift durch Einscannen elektronisch erfasst. Gleichzeitig wird eine der Scheckunterschrift zugeordnete kodierte Kontokennung elektronisch erfasst und interpretiert. Mit Hilfe der Kontokennung werden vorab gespeicherte Scheckunterschriften aus einer Datenbank ausgewählt, welche dann mit der elektronisch erfassten Scheckunterschrift verglichen werden.

Der Erfindung liegt die Aufgabe zugrunde, ein Verfahren sowie ein System anzugeben, welche es gestatten, eine hohe Anzahl von persönlichen Unterschriften, die auf physischen Trägermaterialien wie Papierbögen vorliegen, schnell, effektiv und fehlerfrei in eine elektronische Form zur weiteren Verarbeitung überzuführen.

### Zusammenfassung der Erfindung

Diese Aufgabe wird gelöst durch ein Verfahren zum automatischen Erzeugen und Verarbeiten von Unterschriftsdateien für ein elektronisches Unterschriftenverzeichnis mit den Schritten des Bereitstellens einer Vielzahl von Dokumenten in Papierform, wobei jedes Dokument eine persönliche Unterschrift sowie der Unterschrift zugeordnete Steuerungsinformationen zum Steuern der Verarbeitung der Unterschriftsdateien beinhaltet, wobei die Steuerungsinformationen eine Datensatzkennung und eine Dokumentkennung umfassen, des Einscannens der Vielzahl von Dokumenten, vorzugsweise in einem automatischen Stapelverarbeitungsvorgang, wobei für jedes

Dokument wenigstens eine Unterschriftsdatei erzeugt wird, welche die persönliche Unterschrift in Form von Grafikdaten sowie eine Repräsentation der zugeordneten Steuerungsinformationen enthält, des dokumentweisen Interpretierens der die Steuerungsinformationen umfassenden Repräsentation zum Ermitteln der Datensatzkennung und Dokumentkennung sowie des dokumentweisen Verarbeitens der Unterschriftsdatei in Abhängigkeit der zugeordneten Steuerungsinformationen einschließlich der Schritte des Ergänzens der die persönliche Unterschrift repräsentierenden Grafikdaten um personenbezogene Daten aus einem der Datensatzkennung zugeordneten Datensatz und des Überführens der Grafikdaten zusammen mit den personenbezogenen Daten in das durch die Dokumentkennung bezeichnete elektronische Unterschriftenverzeichnis.

Die auf den Dokumenten in Papierform vorhandenen Steuerungsinformationen gestatten die Implementierung effektiver (Stapel-)Verarbeitungsvorgänge hinsichtlich der zu erzeugenden und der erzeugten Unterschriftsdateien. Für jedes eingescannte Dokument kann eine einzige oder können mehrere solcher Dateien erzeugt werden. Gemäß einer ersten Variante wird für jedes eingescannte Dokument eine einzige Unterschriftsdatei erzeugt, welche sowohl die persönliche Unterschrift in einer elektronisch verarbeitbaren Form als auch eine Repräsentation der zugeordneten Steuerungsinformationen enthält. Gemäß einer zweiten Variante werden für jedes Dokument zwei Unterschriftsdateien erzeugt, wobei eine erste Datei die persönliche Unterschrift in einer elektronisch verarbeitbaren Form und eine mit der ersten Datei assoziierte zweite Datei die Repräsentation der zugeordneten Steuerungsinformationen enthält. In Abhängigkeit vom Inhalt der einzuscannenden Dokumente könnte es auch zweckmäßig sein, pro Dokument drei oder mehr Dateien zu erzeugen.

Die auf einem Dokument in Papierform enthaltene persönliche Unterschrift sowie die zugeordneten Steuerungsinformationen können in einem einzigen Scanvorgang gemeinsam erfasst und in eine elektronisch verarbeitbare Form übergeführt werden. Es ist auch möglich, die Unterschrift und die Steuerungsinformationen pro Dokument in separaten Scanvorgängen zu erfassen, insbesondere wenn die Unterschrift und die Steuerungsinformationen in fest vorgegebenen Bereichen des Dokuments angeordnet sind.

Nach dem Einscannen eines Dokuments werden die auf dem eingescannten Dokument enthaltenen Steuerungsinformationen in der Regel (zunächst) nicht in computerverarbeitbarer Form vorliegen, sondern in Form einer erst noch zu identifizierenden und interpretierenden Repräsentation (beispielsweise in Form von Grafikdaten oder anderen Daten). Insbesondere in solchen Fällen, in denen nach dem Einscannen die persönliche Unterschrift und die zugeordneten Steuerungsinformationen in einer einzigen Unterschriftsdatei enthalten sind, kann daher noch eine Unterscheidung zwischen einerseits den Daten betreffend die persönliche Unterschrift und andererseits den Daten der Repräsentation der zugeordneten Steuerungsinformationen erforderlich sein. Zu diesem Zweck kann eine dokumentweise Identifikation der Repräsentation der Steuerungsinformationen und eine davon getrennte Interpretation des Inhalts der identifizierten Repräsentation der Steuerungsinformationen durchgeführt werden.

Die auf dem Papierdokument dargestellten Steuerungsinformationen können für einen menschlichen Leser unmittelbar verständlich oder aber lediglich von einem technischen Gerät interpretierbar sein. So kann es sich bei den Steuerungsinformationen beispielsweise um einen Steuerungscode handeln. Der Steuerungscode kann beispielsweise ein graphischer Code wie ein Strichcode, ein binärer Code, ein dezimaler Code oder ein hexadezimaler Code sein.

Die Steuerungsinformationen steuern das Verarbeiten der auf der Grundlage der eingescannten Dokumente erzeugten Unterschriftsdateien. Dieses Verarbeiten kann ein Versenden der Unterschriftsdateien über ein Kommunikationsnetzwerk umfassen. Das Versenden der Unterschriftsdaten erfolgt zweckmäßigerweise in Abhängigkeit von den jeweils zugeordneten Steuerungsinformationen. So können die einer Unterschriftsdatei zugeordneten Steuerungsinformationen beispielsweise angeben, ob die Unterschriftsdatei versendet werden soll oder nicht. Zusätzlich oder alternativ hierzu ist es denkbar, aus den einer Unterschriftsdatei zugeordneten Steuerungsinformationen eine Netzwerkadresse abzuleiten, an welche die Unterschriftsdatei gesendet werden soll.

Der Schritt des Verarbeitens der Unterschriftdateien kann ferner ein Abspeichern der Unterschriftsdateien umfassen. Gemäß einer ersten Variante lässt sich aus den einer bestimmten Unterschriftsdatei zugeordneten Steuerungsinformationen ein Dateiname ableiten, unter dem die Unterschriftsdatei abgespeichert wird. Gemäß einer zweiten Variante, die mit der ersten Variante kombinierbar ist, gestatten die einer Unterschriftsdatei zugeordneten Steuerungsinformationen einen Rückschluss auf den Speicherort, an dem die betreffende Unterschriftsdatei abzuspeichern ist. So kann die Unterschriftdatei nach dem Einscannen zunächst temporär in einem Zwischenspeicher abgelegt werden. Nach dem Interpretieren der der Unterschriftsdatei zugeordneten Steuerungsinformationen wird die temporär abgelegte Unterschriftsdatei dann anschließend an einem aus den Steuerungsinformationen abgeleiteten Speicherort (und/oder unter einem aus den Steuerungsinformationen abgeleiteten Dateinamen) endgültig abgespeichert.

Ein Zwischenspeichern der Unterschriftsdatei kann jedoch auch aus anderen oder zusätzlichen Gründen zweckmäßig sein. Beispielsweise können die in den zwischengespeicherten Unterschriftsdateien enthaltenen Unterschriften formatiert oder nachbearbeitet (etwa um die Unterschrift von störendem Beiwerk wie Begrenzungslinien oder von Verunreinigungen zu separieren) und anschließend endgültig abgespeichert werden.

Der Schritt des Verarbeitens der Unterschriftsdateien kann auch ein Sortieren der Unterschriftsdateien beinhalten. Dieses Sortieren erfolgt zweckmäßigerweise in Abhängigkeit von den jeweils zugeordneten Steuerungsinformationen. Beispielsweise können die Unterschriftsdateien in Abhängigkeit von der Dokumentkennung sortiert werden. Die Dokumentkennung kann einen bestimmten Dokumenttyp kennzeichnen. Die eingescannten Dokumente können in diesem Fall nach dem Dokumenttyp sortiert werden. Es wäre denkbar, systemweit eindeutige Dokumentkennungen zu vergeben und die Dokumentkennung zur Unterscheidung der einzelnen Dokumente heranzuziehen.

Zusätzlich oder alternativ zu der Verwendung von Dokumentkennungen können die Steuerungsinformationen eine oder mehrere weitere Kennungen enthalten. Werden die Dokumente beispielsweise aus und/oder für in einer Datenbank abgespeicherte Datensätze mit zugehörigen Datensatzkennungen erzeugt, ist es zweckmäßig, die Datensatzkennungen in die Steuerungsinformationen aufzunehmen.

Die in den Steuerungsinformationen enthaltenen Datensatzkennungen lassen sich für verschiedene Zwecke verwenden. So lassen sich beispielsweise für eingescannte Dokumente, deren Datensatzkennungen anhand der zugeordneten Steuerungsinformationen ermittelt wurden, unter Verwendung der Datensatzkennungen Daten aus den zugehörigen Datensätzen auslesen. Die ausgelesenen Daten können zum Erzeugen von Listen oder für andere Zwecke verwendet werden.

Mittels der erzeugten Unterschriftsdateien lässt sich ein elektronisches Unterschriftenverzeichnis erzeugen. Die Unterschriftsdatei oder deren Inhalt können in Form eines elektronischen Unterschriftenverzeichnisses auf einem zentralen Server bereitgestellt werden, auf den eine Vielzahl von Netzwerkkomponenten über ein Kommunikationsnetzwerk Zugriff besitzt. Auf das Unterschriftenverzeichnis kann beispielsweise zum Zweck des automatischen Unterschriftenvergleichs oder zum gezielten Anfordern einer oder mehrerer Unterschriften in elektronischer Form (z. B. in Form einer Grafikdatei) zugegriffen werden.

Sofern die Datensätze personenbezogene Daten enthalten, können diese selektiv in Listen übernommen werden. Die Listen enthalten demgemäß personenbezogene Daten, die mit den eingescannten persönlichen Unterschriften verknüpft sind. Die Listen lassen sich in elektronischer Form über ein Kommunikationsnetzwerk oder in Papierform an ein öffentliches Register (z. B. ein Handelsregister) senden.

Das vorstehend erläuterte Verfahren zum automatischen Erzeugen und Verarbeiten von Unterschriftsdateien basiert auf dem Bereitstellen einer Vielzahl von Dokumenten in Papierform. Nachfolgend werden verschiedenen Aspekte im Zusammenhang mit dem Bereitstellen der Papierdokumente erläutert. Diese Aspekte lassen sich in vorteilhafter Weise mit dem Verfahren zum Erzeugen und Verarbeiten von Unterschriftsdateien kombinieren. Die folgenden Aspekte können jedoch auch unabhängig von diesem Verfahren implementiert werden.

Das Bereitstellen der Papierdokumente kann auf einer Datenbank mit Datensätzen basieren, denen jeweils eine Datensatzkennung zugeordnet ist. Die in der Datenbank enthaltenen Datensätze können (z. B. periodisch) nach Statusänderungen durchsucht werden, die das Erzeugen einer neuen Unterschriftsdatei erforderlich machen. In Abhängigkeit von festgestellten Statusänderungen können dann dokument- oder datensatzweise Steuerungsinformationen erzeugt werden. Die für einen bestimmten Datensatz erzeugten Steuerungsinformationen umfassen zweckmäßigerweise wenigstens die dem Datensatz zugeordnete Datensatzkennung. Anschließend lassen sich pro festgestellter (unterschriftsrelevanter) Statusänderung eines oder mehrere Dokumente in elektronischer Form erzeugen, welche die vorher erzeugten Steuerungsinformationen enthalten. Vorzugsweise handelt es sich bei den elektronischen Dokumenten um Grafikdateien. Die Grafikdateien können die Steuerungsinformation in Form von Grafikdaten enthalten.

Den Datensätzen kann jeweils eine Netzwerkadresse zugeordnet sein. In diesem Fall lassen sich die erzeugten elektronischen Dokumente über ein Kommunikationsnetzwerk an die jeweils zugehörige Netzwerkadresse senden. Die Netzwerkadresse kann zum Bestandteil der Steuerungsinformationen gemacht werden.

Der Adressat eines elektronischen Dokuments empfängt das Dokument über das Kommunikationsnetzwerk. Nach dem Empfangen des elektronischen Dokuments kann dieses zur Erzeugung einen Papierdokuments empfängerseitig ausgedruckt werden. Das ausgedruckte Dokument beinhaltet die Steuerungsinformationen (z.B. in Gestalt eines Strichcodes) sowie einen für eine persönliche Unterschrift vorgesehenen Bereich. Nachdem die erforderliche Unterschrift geleistet wurde, kann das Papierdokument, wie oben erläutert, zum Erzeugen einer Unterschriftsdatei eingescannt werden.

Die Datensatzkennung sowie der Sendezeitpunkt eines über das elektronische Kommunikationsnetzwerk an eine Netzwerkadresse gesendete Dokuments können abgespeichert werden. Ein Abspeichern dieser Daten ermöglicht einen Vergleich der in den Steuerungsinformationen eines eingescannten Dokuments enthaltenen Datensatzkennung mit der abgespeicherten Datensatzkennung. Wird für eine abgespeicherte Datensatzkennung innerhalb eines vordefinierten Zeitraums ab dem Sendezeitpunkt kein dieser Datensatzkennung zugehöriges eingescanntes Dokument erkannt, kann eine Fehlermeldung erzeugt werden. Die Fehlermeldung kann über das Kommunikationsnetzwerk an eine der betreffenden Datensatzkennung zugeordnete Netzwerkadresse gesendet werden. Wird andererseits ein der abgespeicherten Datensatzkennung zugehöriges eingescanntes Dokument erkannt, können die abgespeicherte Datensatzkennung und der zugehörige Sendezeitpunkt als erledigt markiert, gelöscht oder anderweitig bearbeitet werden.

Gemäß einer Ausführungsform der Erfindung wird eine Mehrzahl unterschiedlicher elektronischer Dokumentvorlagen, denen jeweils eine Dokumentkennung zugeordnet ist, bereitgestellt. Ein automatisches Auswählen einer der bereitgestellten Dokumentvorlagen kann in Abhängigkeit von der für einen Datensatz festgestellten Statusänderung (und ggf. weiterer Parameter) erfolgen. Die Dokumentkennung der ausgewählten Dokumentvorlage lässt sich in die Steuerungsinformationen einfügen und nach dem Einscannen des entsprechenden Papierdokuments zu Verarbeitungszwecken auswerten.

Die Erfindung lässt sich als Software-Lösung, als Hardware-Lösung oder als eine kombinierte Hardware/Software -Lösung implementieren. Im Hinblick auf eine Software-Lösung umfasst die Erfindung ein Computerprogrammprodukt mit Programmcodemitteln zum Ausführen der obigen Schritte, wenn das Computerprogramm-produkt auf einem oder mehreren Computern ausgeführt wird. Das Computerprogrammprodukt kann auf einem computeriesbaren Speichermedium abgespeichert sein.

Im Hinblick auf die Hardware-Lösung stellt die Erfindung ein Computersystem zum automatischen Erzeugen und Verarbeiten von Unterschriftsdateien für ein elektronisches Unterschriftenverzeichnis bereit. Das Computersystem umfasst einen Scanner mit Mehrblatt-Einzug zur Aufnahme einer Vielzahl von Dokumenten in Papierform, wobei jedes Dokument eine persönliche Unterschrift sowie der Unterschrift zugeordnete Steuerungsinformationen zum Steuern der Verarbeitung der Unterschriftendateien beinhaltet, wobei die Steuerungsinformation eine Datensatzkennung und eine Dokumentkennung umfassen und wobei der Scanner zum Einscannen der Vielzahl von Dokumenten in einem automatisch Stapelverarbeitungsvorgang ausgebildet sein kann. Das Computersystem umfasst ferner einen mit dem Scanner gekoppelten Computer, der für jedes eingescannte Dokument wenigstens eine Unterschriftsdatei erzeugt, welche die persönliche Unterschrift in Form von Grafikdaten sowie eine Repräsentation der zugeordneten Steuerungsinförmationen enthält. Der Computer ist programmiert, um dokumentweise den Inhalt der in einer Repräsentation der Steuerungsinformationen enthaltenen Datensatzkennung und Dokumentkennung zu interpretieren und die zugehörige Unterschriftsdatei in Abhängigkeit der zugeordneten Steuerungsinformationen zu verarbeiten, wobei zum dokumentweisen Verarbeiten Mittel zum Ergänzen der die persönliche Unterschrift repräsentierenden Grafikdaten um personenbezogene Daten aus einem der Datenkennung zugeordneten Datensatz und Mittel zum Überführen der Grafikdaten zusammen mit den personenbezogenen Daten in das durch die Dokumentkennung bezeichnete elektronische Unterschriftenverzeichnis vorgesehen sind.

Das Computersystem kann über ein öffentliches oder nicht-öffentliches Kommunikationsnetzwerk (z. B. das Internet oder das Intranet) mit einem oder mit mehreren weiteren Computersystemen gekoppelt sein. Zweckmäßigerweise besitzen die über das Kommunikationswerk miteinander gekoppelten Systeme jeweils wenigstens eine temporäre oder permanente Netzwerkadresse. Eine der an das Kommunikationsnetzwerk angeschlossenen Computersysteme kann einen Server beinhalten, auf dem die Unterschriftsdateien oder deren Inhalte in Form eines elektronischen Unterschriftenverzeichnis bereitgestellt werden.

Die Erfindung betrifft ferner ein Dokument für das automatische Erzeugen von Unterschriftsdateien. Das Dokument enthält einen ersten Bereich, in dem eine Unterschrift geleistet werden kann, und einen zweiten Bereich mit Steuerungsinformationen. Die Steuerungsinformationen gestatten ein Steuern des Verarbeitens einer auf der Grundlage des Dokuments erzeugten Unterschriftsdatei. Der erste Bereich kann durch entsprechende graphische Hilfsmittel wie Linien, Punkte, usw. begrenzt sein. Solche graphischen Hilfsmittel erleichtern nicht nur die Unterschriftsleistung, sondern gestatten darüber hinaus eine einfachere Lokalisierung und Identifizierung der in einer elektronischen Datei enthaltenen Unterschriftsdaten.

### Kurze Beschreibung der Zeichnungen

Nachfolgend werden bevorzugte Ausführungsbeispiele und vorteilhafte Ausgestaltungen und Weiterbildungen der Erfindungen unter Bezugnahme auf die beigefügten Zeichnungen näher erläutert. Es zeigt:
- Fig. 1: eine schematische Darstellung des Erzeugens von Dokumenten in Papierform gemäß einer Ausführungsform der Erfindung;
- Fig. 2A: ein erfindungsgemäßes Dokument in Papierform mit einer persönlichen Unterschrift sowie mit der Unterschrift zugeordneten Steuerungsinformationen;
- Fig. 2B: eine Veranschaulichung des Inhalts der auf dem Papierdokument gemäß 2A dargestellten Steuerungsinformationen;
- Fig. 3: eine schematische Darstellung des Erzeugens und Verarbeitens von Unterschriftsdateien gemäß einer Ausführungsform der Erfindung;
- Fig. 4: ein Ablaufdiagramm für die Erzeugung und Verarbeitung von Unterschriften;
- Fign. 5A-5C: einen erfindungsgemäßen Zeit- und Ablauf-Steuermechanismus.

### Beschreibung bevorzugter Ausführungsbeispiele

Nachfolgend werden beispielhaft die beiden grundlegenden erfindungsgemäßen Komplexe erläutert. Der erste Komplex betrifft das Erzeugen von Papierdokumenten, die jeweils dokumentbezogenen Steuerungsinformationen sowie einen für eine persönliche Unterschrift vorgesehenen Bereich umfassen. Der zweite Aspekt betrifft das automatische Erzeugen von Unterschriftsdateien sowie deren Verarbeitung auf Grundlage der jeweils zugehörigen Steuerungsinformationen. Die beiden Komplexe sind prinzipiell voneinander unabhängig, sie lassen sich jedoch in vorteilhafter Weise miteinander kombinieren.

### Erzeugen von Dokumenten in Papierform

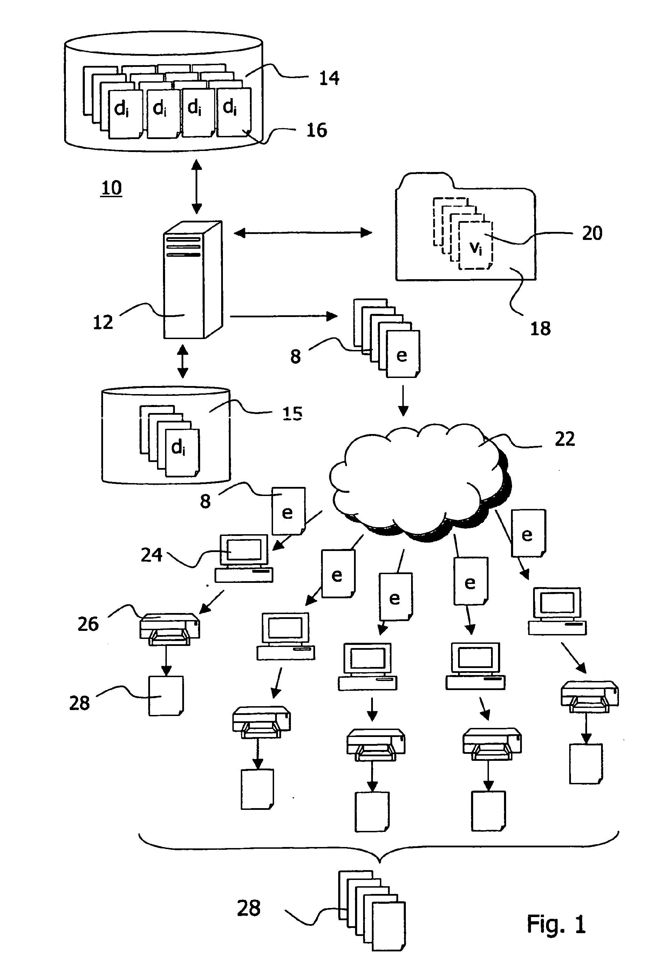

Im Folgenden wird unter Bezugnahme auf die schematische Figur 1 ein Verfahren zum Erzeugen von Dokumenten in Papierform erläutert. Diese Papierdokumente bilden die Grundlage für das spätere Erzeugen und Verarbeiten von Unterschriftsdateien.

Figur 1 zeigt zunächst ein zum Erzeugen elektronischer Dokumente 8 ausgebildetes Computersystem 10. Das Computersystem 10 umfasst einen Anwendungsserver 12, eine externe, von vielen unterschiedlichen Anwendungen genutzte und fortlaufend aktualisierte Datenbank 14, die von einem in Figur 1 nicht dargestellten, separaten Datenbankserver verwaltet wird, und eine lokale Datenbank 15. Bei der Datenbank 14 handelt es sich im Ausführungsbeispiel um eine Personaldatenbank, in der eine Vielzahl von Personaldatensätzen 16 verwaltet werden. Jedem Datensatz 16 ist eine eindeutige Datensatzkennung dᵢ zugeordnet. Bei dieser Datensatzkennung dᵢ kann es sich beispielsweise um eine Personalnummer handeln. In der lokalen Datenbank 15 sind Kopien derjenigen Datensätze 16 aus der Datenbank 14 enthalten, bei welchen unterschriftsrelevante Statusänderungen auftreten können. Das Vorsehen der lokalen Datenbank 15 entspricht einer Vorauswahl relevanter Datensätze und beschleunigt die Verarbeitung.

Der Anwendungsserver 12 hat Zugriff auf ein Verzeichnis 18, in dem eine Mehrzahl elektronischer Dokumentvorlagen 20 abgespeichert ist. Jeder Dokumentvorlage 20 ist eine eindeutige (z.B. numerische oder alphanumerische) Dokumentkennung vᵢ zugeordnet. Wie bereits erläutert, behandelt das vorliegende Ausführungsbeispiel das Erzeugen und Verarbeiten von Unterschriftsdateien für elektronische Unterschriftsverzeichnisse und öffentliche (elektronische) Register. Es können daher eine oder mehrere Dokumentvorlagen für das elektronische Unterschriftenverzeichnis und eine oder mehrere Dokumentvorlagen für das öffentliche Register bereitgestellt werden. So kann eine Dokumentvorlage mit der Dokumentkennung v₁ für die Zwecke des öffentlichen Registers und eine Dokumentvorlage mit der Dokumentkennung v₂ für die Zwecke des elektronischen Unterschriftenverzeichnisses vorgesehen sein.

Der Anwendungsserver 12 führt in periodischen Abständen (z. B. wöchentlich) eine Anwendung aus, welche die in der Datenbank 14 abgelegten Datensätze 16 auf unterschriftsreievante Statusänderungen hin überprüft. Diese Überprüfung beinhaltet einen Statusvergleich der in der Datenbank 14 abgelegten Datensätze 16 mit den in der lokalen Datenbank 15 enthaltenen Datensätzen. Hierbei wird ferner überprüft, ob (weitere) Datensätze aus der Datenbank 14 in die lokale Datenbank 15 kopiert werden müssen.

Eine unterschriftsrelevante Statusänderung liegt beispielsweise dann vor, wenn bei einem Vergleich des Inhalts der Datenbanken 14 und 15 festgestellt wird, dass in der Datenbank 14 ein Datensatz für einen neu eingetretenen unterschriftsberechtigten Mitarbeiten neu angelegt wurde. Die Unterschrift dieses neuen Mitarbeiters muss nämlich im elektronischen Unterschriftenverzeichnis und/oder im öffentlichen Register hinterlegt werden. Auch bei Statusänderungen aufgrund von Beförderungen oder dem Ausscheiden eines Mitarbeiters kann es vorkommen, dass das elektronische Unterschriftenverzeichnis und/oder das elektronische Register aktualisiert werden müssen/muss. Da Beförderungen oftmals an bestimmten Stichtagen wirksam werden, kann es vorkommen, dass sich in der Datenbank 14 bei vielen hundert Datensätzen unterschriftsrelevante Veränderungen ergeben. Diese hohe Anzahl verdeutlicht das Erfordernis einer effektiven elektronischen Unterschriftenverwaltung.

Jede von der auf dem Anwendungsserver 12 laufenden Anwendung erkannte, unterschriftsrelevante Statusänderung wird dahingehend überprüft, welche Auswirkungen die Statusänderung auf das elektronische Unterschriftenverzeichnis und/oder das öffentliche Register besitzt. In Abhängigkeit von einer festgestellten Statusänderung wählt die Anwendung automatisch eine oder mehrere passende Dokumentvorlagen 20 aus dem Verzeichnis 18 und erzeugt außerdem die für die weitere Ablaufsteuerung erforderlichen Steuerungsinformationen. Die Steuerungsinformationen umfassen einerseits die Datensatzkennung dᵢ des Datensatzes 16, bei dem sich eine unterschriftsrelevante Statusänderung ergeben hat, und andererseits die Kennung vᵢ der einen oder mehreren ausgewählten Dokumentvorlagen 20. Zur Erzeugung eines elektronischen Dokuments 8 werden die Steuerungsinformationen in Form der Datensatzkennung dᵢ und der Dokumentkennung vᵢ ermittelt und in einen Steuerungscode (nämlich einen Strichcode) umgesetzt. Für den Strichcode werden Grafikdaten erzeugt und mit den Grafikdaten der ausgewählten Dokumentvorlage 20 in solcher Weise zu einem elektronischen Dokument 8 kombiniert, dass beim Ausdrucken des elektronischen Dokuments 8 automatisch der Strichcode mitausgedruckt wird. Dies wird im Folgenden näher erläutert.

Die von dem Anwendungsserver 12 bei einem der periodischen Durchläufe ermittelten unterschriftsrelevanten Statusänderungen innerhalb von Datensätzen 16 werden mit den jeweils zugehörigen Datensatzkennungen dᵢ temporär abgespeichert. Anschließend werden die Statusänderungen datensatzweise überprüft und mit einem bereits vorher abgespeicherten Zuordnungsschema verglichen. Das Zuordnungsschema weist anhand der Dokumentkennungen vᵢ bestimmten Statusänderungen bestimmte Dokumentvorlagen 20 zu.

Für jede unterschriftsrelevante Statusänderung verknüpft der Anwendungsserver 12 die entsprechende Datensatzkennung dᵢ des betroffenen Datensatzes mit der der Statusänderung zugewiesenen Dokumentkennung vᵢ. Diese Verknüpfung geschieht durch das datensatzweise Erzeugen von Steuerungsinformationen, welche sowohl die Datensatzkennung dᵢ als auch die entsprechende zugewiesene Dokumentkennung vᵢ enthalten. Zur Erzeugung der elektronischen Dokumente 8 wird für einen Datensatz mit unterschriftsrelevanter Statusänderung dann die der ermittelten Dokumentkennung vᵢ zugehörige Dokumentvorlage 20 aus dem Verzeichnis 18 geladen und mit den für den Datensatz erzeugten Steuerungsinformationen (einschließlich der Datensatzkennung dᵢ und der Dokumentkennung vᵢ) verknüpft.

Das Verknüpfen der Dokumentvorlagen 20 mit den vom Anwendungsserver 12 datensatzweise ermittelten Steuerungsinformationen kann auf unterschiedliche Art und Weise geschehen. Liegen die Dokumentvorlagen 20 als Grafikdateien vor, können die Steuerungsinformationen in Form von Grafikdaten in diese Grafikdateien eingebunden werden. Zu diesem Zweck kann es erforderlich sein, die Steuerungsinformationen zu kodieren. Liegen die Steuerungsinformationen beispielsweise in Gestalt einer dezimalen Ziffernfolge vor, kann diese Ziffernfolge in einen Strichcode oder einen anderen vorzugsweise grafischen Steuerungscode umgewandelt werden. Anschließend kann der ermittelte Code in Grafikdaten umgesetzt werden, welche in die Dokumentvorlage 20 eingebunden werden.

Nach dem Erzeugen der elektronischen Dokumente 8 durch datensatzweises Einbinden der vom Anwendungsserver 12 für unterschriftsrelevante Statusänderungen ermittelten Steuerungsinformationen in die Dokumentvorlagen 20 werden die elektronischen Dokumente 8 über ein Kommunikationsnetzwerk 22 (beispielsweise das Internet oder ein Intranet) an einzelne Netzwerkkomponenten 24 gesandt. Hierfür ermittelt der Anwendungsserver 12 für jedes zu sendende Dokument 8 eine zugehörige Netzwerkadresse (beispielsweise eine Internetadresse). Jedem Datensatz 16 in der Datenbank 14 sind zu diesem Zweck eine oder mehrere Netzwerkadressen zugeordnet. Anhand der in die Steuerungsinformationen eines zu sendenden Dokuments 8 einzufügenden Datensatzkennung dᵢ kann der Anwendungsserver 12 die in der Datenbank 14 mit dieser Datensatzkennung dᵢ verknüpfte Netzwerkadresse ermitteln.

Nach der Ermittlung der Netzwerkadressen für die erzeugten elektronischen Dokumente 8 werden diese Dokumente 8 über das Kommunikationsnetzwerk 22 an die ermittelten Netzwerkadressen (d. h. an die Netzwerkadressen zugeordneten Netzwerkkomponenten 24) versendet. Die elektronischen Dokumente 8 können vom Anwendungsserver 12 beispielsweise als Anhänge von E-Mail-Benachrichtigungen versendet werden.

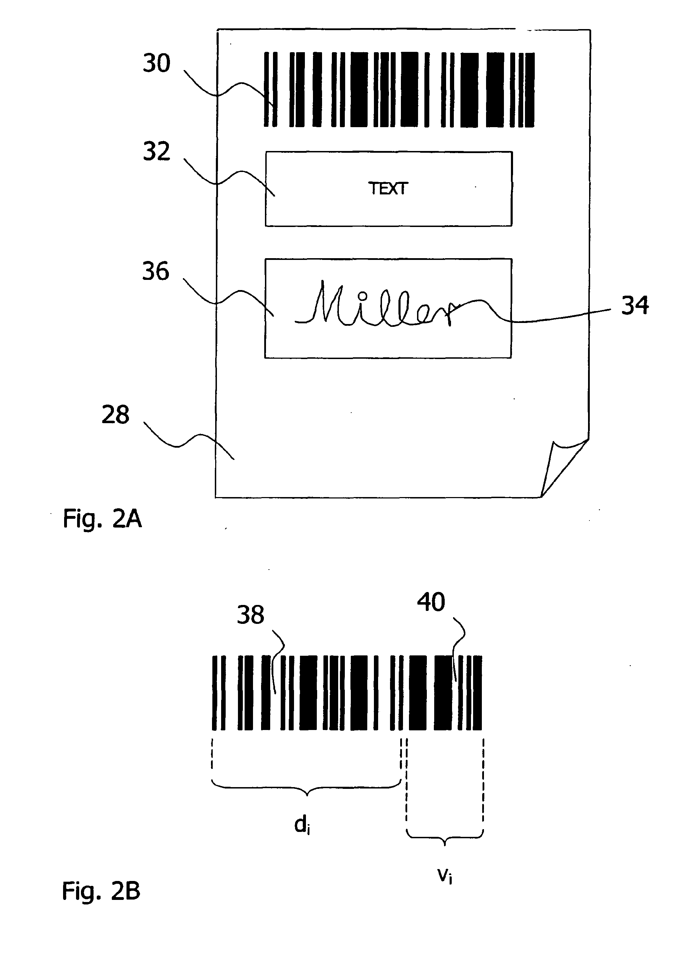

Wie sich aus Figur 1 ergibt, ist jeder Netzwerkkomponente 24 ein lokaler Drucker 26 zugeordnet. Von jeder Netzwerkkomponente 24 kann daher ein empfangenes elektronisches Dokument 8 lokal ausgedruckt und in ein Dokument 28 in Papierform umgewandelt werden. Ein Beispiel für ein solches Papierdokument 28 ist in Fig. 2A dargestellt. Wie Fig. 2A entnommen werden kann, beinhaltet das ausgedruckte Dokument 28 die Steuerungsinformationen 30 in Form eines Strichcodes, ein Textfeld 32 sowie einen für eine persönliche Unterschrift 34 vorgesehenen umrandeten oder anderweitig markierten Bereich 36.

Während die Steuerungsinformationen 30 keinen (von einer die Unterschrift 34 leistenden Person) unmittelbar erfassbaren Bedeutungsinhalt besitzen, kann das Textfeld 32 Angaben enthalten, in welchem Zusammenhang die Unterschrift 34 zu leisten ist. So kann sich der Inhalt des Textfelds 32 beispielsweise auf ein Unterschriftenverzeichnis oder auf ein Handelsregister beziehen. Es wäre auch denkbar, dass es sich bei dem Dokument 28 um einen öffentlichen Formularvordruck beispielsweise für handelsregisterliche oder für andere Zwecke handelt.

Fig. 2B zeigt zur Veranschaulichung den Bedeutungsinhalt der als Strichcode ausgebildeten Steuerungsinformationen 30. Wie Fig. 2B zu entnehmen ist, umfasst der Strichcode (wenigstens) einen ersten Codeabschnitt 38 und einen zweiten Codeabschnitt 40. Der erste Codeabschnitt 38 beinhaltet die Datensatzkennung dᵢ desjenigen Datensatzes 16, für den das Dokument 28 erzeugt wurde. Der zweite Codeabschnitt 40 enthält die Dokumentkennung vᵢ der Dokumentvorlage 20, welche dem Dokument 28 zugrunde liegt. Erforderlichenfalls könnten die Steuerungsinformationen 30 um weitere Codeabschnitte ergänzt werden.

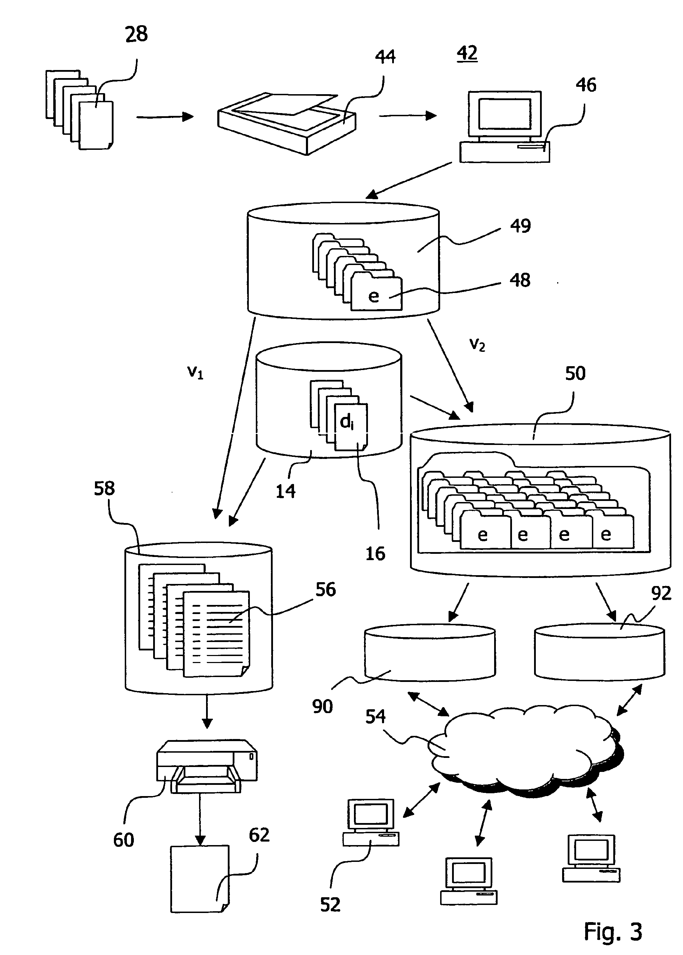

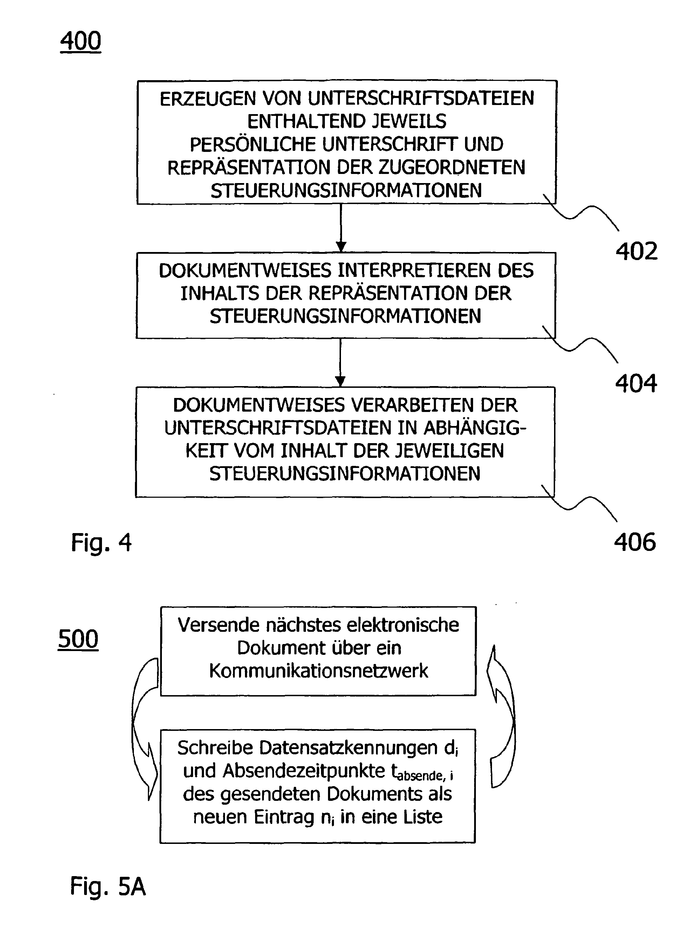

Wie in Fig. 1 dargestellt, werden die dezentral ausgedruckten Dokumente 28 nach Unterschriftsleistung zentral gesammelt und als Dokumentstapel 40 dem nächsten Verfahrensschritt, nämlich der automatischen Erzeugung und Verarbeitung von Unterschriftsdateien, zugeführt. Dieser weitere Verfahrensschritt wird nachfolgend unter Bezugnahme auf die Fign. 3 und 4 näher erläutert.

### Erzeugen und Verarbeiten von Unterschriftsdateien

In Fig. 3 ist ein erfindungsgemäßes Computersystem 42 zum automatischen Erzeugen und Verarbeiten von Unterschriftsdateien dargestellt. Das Computersystem 42 umfasst einen Scanner 44 sowie einen mit dem Scanner 44 gekoppelten Computer 46.

Der Scanner 44 besitzt einen Mehrblatt-Einzug zur Aufnahme des wie oben erläutert erzeugten Dokumentstapels 40. Der Computer 46 ist ausgebildet, um im Zusammenwirken mit dem Scanner 44 die in dem Ablaufdiagramm 400 gemäß Fig. 4 dargestellten Schritte durchzuführen.

In einem ersten Schritt 402 werden aus den Papierdokumenten 40 dokumentweise Unterschriftsdateien erzeugt. Für jedes Dokument wird dabei mindestens eine Unterschriftsdatei angelegt, welche die persönliche Unterschrift 34 in einer elektronische verarbeitbaren Form sowie eine Repräsentation der zugeordneten Steuerungsinformationen 30 (vgl. Fig. 2A) enthält. Erforderlichenfalls können pro Dokument die Unterschrift und die Steuerungsinformationen auch in getrennten Dateien abgelegt werden.

In einem nächsten Schritt 404 wird der Inhalt der Repräsentation der Steuerungsinformationen dokumentweise interpretiert. Erforderlichenfalls kann dem Schritt des Interpretierens ein Identifizierungsschritt vorausgehen, um die in den Unterschriftsdateien enthaltenen Steuerungsinformationen-Repräsentationen von anderweitigen Dateiinhalten zu separieren.

Schließlich werden die Unterschriftsdateien in Schritt 406 dokumentweise und in Abhängigkeit vom Inhalt der jeweils zugeordneten und interpretierten Steuerungsinformationen verarbeitet. Der Verarbeitungsschritt 406 kann ein Sortieren der Unterschriftsdateien, ein Versenden der Unterschriftsdateien über ein Kommunikationsnetzwerk oder anderweitige bzw. zusätzliche Verarbeitungsschritte umfassen.

Im Folgenden wird die in Fig. 4 grob skizzierte Vorhergehensweise unter Bezugnahme auf Fig. 3 näher erläutert.

Zunächst wird in einem automatischen Stapelverarbeitungsvorgang die Vielzahl 40 von Dokumenten 28 mit dem in Fig. 2A dargestellten Erscheinungsbild unter Verwendung des Scanners44 mit Mehrblatt-Einzug eingescannt. Dabei wird für jedes eingescannte Dokument 28 eine Unterschriftsdatei 48 erzeugt. Bei den dokumentweise erzeugten Unterschriftsdateien 48 handelt es sich um Grafikdateien in einem gängigen Format (z.B. in einem JPG- oder einem TIF-Format). Die Unterschriftsdateien enthalten daher die auf einem Dokument 28 enthaltene persönliche Unterschrift 34 sowie die Steuerungsinformationen 30 in Form von Grafikdaten. Da die Steuerungsinformationen als Grafikdaten nicht unmittelbar vom Computer 46 interpretierbar sind, werden die den Steuerungsinformationen entsprechenden Grafikdaten auch als Repräsentation der Steuerungsinformationen bezeichnet. Die der persönlichen Unterschrift 34 entsprechenden Grafikdaten liegen in einer elektronisch verarbeitbaren (z.B. grafisch darstellbaren oder als Datei abspeicher- und versendbaren) Form vor.

Die nach dem Einscannen vorliegenden Unterschriftsdateien 48 werden zunächst temporär in einem Zwischenspeicher 49 (und unter einem temporären Dateinamen) abgespeichert. Die Vergabe endgültiger Dateinamen und endgültiger Speicherorte erfolgt erst nach einer Interpretation der in den Unterschriftsdateien 48 enthaltenen Steuerungsinformationen.

Vor der Interpretation der Steuerungsinformationen müssen diese dokumentweise identifiziert werden. Ist die Lage der Steuerungsinformationen 30 auf den Dokumenten 28 bekannt, kann die Repräsentation der Steuerungsinformationen in den Grafikdaten einer Unterschriftsdatei 48 einfach und schnell ermittelt werden. Andernfalls müssen die Unterschriftsdateien 48 jeweils einem Bildverarbeitungsvorgang unterzogen werden. Im Rahmen des Bildverarbeitungsvorgangs werden zur Identifizierung der in einer Unterschriftsdatei enthaltenen Repräsentation der Steuerungsinformationen die den Steuerungsinformationen entsprechenden Grafikdaten von den weiteren in der Unterschriftsdatei enthaltenen Grafikdaten (wie dem Textfeld 32 und der Unterschrift 34) unterschieden und für die Zwecke einer nachfolgenden Interpretation separiert.

Nach dem Identifizieren der den Steuerungsinformationen entsprechenden Grafikdaten in der Unterschriftsdatei werden die Steuerungsinformationen dokumentweise interpretiert. Das Interpretieren der Steuerungsinformationen umfasst beim vorliegenden Ausführungsbeispiel (vgl. Figuren 2A und 2B) ein Dekodieren der Strichcodeabschnitte 38 und 40 zur Ermittlung der einem eingescannten Dokument 28 zugeordneten Datensatzkennung dᵢ sowie Dokumentkennung vᵢ. Im Anschluss an die Ermittlung der Kennungen dᵢ und vᵢ erfolgt ein dokumentweises Verarbeiten der Unterschriftsdateien in Abhängigkeit von diesen Kennungen dᵢ und vᵢ. Dieses Verarbeiten in Abhängigkeit von den Kennungen dᵢ und vᵢ kann ein Versenden des Unterschriftsdateiinhalts über ein Kommunikationsnetzwerk, ein (endgültiges) Abspeichern der Unterschriftsdateien 48 unter einem aus wenigstens einer der Kennungen dⱼ und vᵢ abgeleiteten Dateinamen und/oder Speicherort, ein Sortieren der Unterschriftsdateien 48 in Abhängigkeit von wenigstens einer der Kennungen dᵢ und vᵢ, das Erzeugen von Listen, usw. beinhalten.

Nachfolgend werden unter Bezugnahme auf Fig. 3 beispielhafte Verarbeitungsvorgänge im Zusammenhang mit dem Aktualisieren eines elektronischen Unterschriftenverzeichnisses einerseits und von Handelsregistern andererseits erläutert. Der Einfachheit halber wird hierbei davon ausgegangen, dass lediglich zwei unterschiedliche Dokumentvorlagen 20 mit zugehörigen Dokumentkennungen v₁ und v₂ verwendet werden.

Die Dokumentkennung v₁ bezeichnet dabei ein Dokument 28 mit einer Unterschrift 34, die für ein Handelsregister vorgesehen ist, während die Dokumentkennung v₂ ein Dokument 28 mit einer Unterschrift 34 bezeichnet, die für ein elektronisches Unterschriftenverzeichnis vorgesehen ist. Die Dokumentkennungen v₁ und v₂ werden beim vorliegenden Ausführungsbeispiel daher zu Sortierungszwecken verwendet.

Wie in Fig. 3 veranschaulicht, erfolgt im Anschluss an das temporäre Abspeichern der Unterschriftsdateien 48 in dem Zwischenspeicher 49 und das dokumentsweise Interpretieren der Steuerungsinformationen ein Auswerten der Dokumentkennungen. Wie bereits erläutert, ist die Dokumentkennung V₂ mit dem Einstellen der damit verknüpften Unterschriftsdatei in ein elektronisches Unterschriftenverzeichnis 50 verbunden.

Vor dem Einstellen in das elektronische Unterschriftenverzeichnis 50 werden die Unterschriftsdateien 48 bearbeitet, um die den Unterschriften 34 entsprechenden Grafikdaten zu separieren. Die den Unterschriften 34 entsprechenden Grafikdaten werden um Informationen aus jeweils korrespondierenden Datensätzen 16 aus der Datenbank 14 (oder der lokalen Datenbank 15) ergänzt und als (bearbeitete) Unterschriftsdateien aus dem Zwischenspeicher 49 in das elektronische Unterschriftenverzeichnis 50 übergeführt. Die Unterschriftsdateien, welche in das elektronische Unterschriftenverzeichnis 50 übergeführt werden, ersetzen oder ergänzen dort bereits vorhandene Unterschriftsdateien. Außerdem löst das Überführen von Unterschriftsdateien in das elektronische Unterschriftenverzeichnis 50 ein globales Update der dort bereits abgespeicherten Unterschriftsdateien mit den Daten aus der Datenbank 14 aus.

Im elektronischen Unterschriftenverzeichnis 50 werden die Unterschriftsdateien unter Dateinamen abgespeichert, die aus den in den Steuerungsinformationen 30 enthaltenen Datensatzkennungen dᵢ abgeleitet wurden. So wäre es denkbar, die Unterschriftsdateien unmittelbar unter den Datensatzkennungen dᵢ abzuspeichern. Es könnte auch daran gedacht werden, unter Verwendung der in den Steuerungsinformationen 30 enthaltenen Datensatzkennungen dᵢ zugeordnete personenbezogene Daten (wie beispielsweise Vor- und Nachname) aus der Datenbank 14 (oder der lokalen Datenbank 15) zu lesen und mit den zugehörigen Unterschriftdateien im Unterschriftenverzeichnis 50 abzuspeichern.

Wie sich aus Fig. 3 ergibt, haben eine Mehrzahl von Netzwerkkomponenten 52 über ein Kommunikationsnetzwerk 54 (beispielsweise das Internet oder ein Intranet) mittelbaren Zugriff auf das elektronische Unterschriftenverzeichnis 50. Um einen unmittelbaren Zugriff auf das elektronische Unterschriftenverzeichnis 50 zu unterbinden, wird der Inhalt des Unterschriftenverzeichnisses 50 in zwei separate Datenbanken 90, 92 kopiert. Auf die erste der beiden Datenbanken 90, 92 haben die Netzwerkkomponenten 52 über das Intranet Zugriff und auf die zweite der beiden Datenbanken 90, 92 über das Internet.

Die Netzwerkkomponenten 52 können die in den Datenbanken 90, 92 enthaltenen Unterschriftsdateien für einzelne Personen herunterladen oder, entsprechende Zugriffsrechte vorausgesetzt, den Inhalt der Datenbanken 90, 92 bearbeiten. Das elektronische Unterschriftenverzeichnis 50 sowie die Datenbanken 90, 92 können ferner für Zwecke der automatischen Unterschriftenerkennung oder des automatischen Unterschriftenvergleichs herangezogen werden. Die in den Datenbanken 50, 90 und 92 enthaltenen Unterschriftsdateien sind "wasserzeichengeschützt". Dies bedeutet, dass jede heruntergeladene Datei (sowie deren Inhalt) mit solchen Informationen verknüpft sind, die auch noch zu einem späteren Zeitpunkt einen Rückschluss dahingehend erlauben, dass die Dateien (und deren Inhalte) einer der Datenbanken 50, 90 und 92 entstammen.
Ist einer in dem Zwischenspeicher 49 temporär abgelegten Unterschriftsdatei 48 anstatt der Dokumentkennung v_{z} die Dokumentkennung v₁ zugeordnet, beinhaltet das Verarbeiten der Unterschriftsdateien eine automatische Listenerzeugung für handelsregisterliche Zwecke. Wurde demgemäß für eine der Unterschriftsdateien 48 in den Steuerungsinformationen 30 die Dokumentkennung v₁ ermittelt, wird in einem nächsten Schritt unter Verwendung der in diesen Steuerungsinformationen 30 enthaltenen Datensatzkennung dᵢ auf die Datenbank 14 (oder die Datenbank 15) zugegriffen. Genauer gesagt wird auf den mit der Datensatzkennung dᵢ bezeichneten Datensatz 16 zugegriffen, um personenbezogene Daten, die in diesem Datensatz 16 enthalten sind, aus der Datenbank 14 zu laden und in eine oder mehrere elektronische Listen 56 in einem weiteren Zwischenspeicher 58 einzuschreiben. Für jedes eingescannte Dokument 28 mit der Dokumentkennung v₁ werden daher personenbezogene Daten aus der Datenbank 14 (oder der Datenbank 15) in die elektronischen Listen 56 übernommen.

Die Listen 56 können getrennt nach dem Typ der unterschriftsrelevanten Statusänderung (also dem Mutationsgrund wie beispielsweise einer Namensänderung, einem Neueintrag, einer Beförderung, einer Löschung, einer Wohnortänderung, usw.) angelegt werden. Zur Feststellung des Mutationsgrunds wird auf der Grundlage der Datensatzkennung dᵢ auf die lokale Datenbank 15 zugegriffen, welche vom Anwendungsserver 12 datensatzweise mit entsprechenden Informationen angereichert wurde. Der Mutationsgrund ist daher das Kriterium, nach welchem die eingescannten Dokumente 28 (bzw. die abgeleiteten personenbezogenen Daten) den einzelnen elektronischen Listen 56 zugeordnet werden.

Die elektronischen Listen 56 können zu unterschiedlichen Zwecken eingesetzt werden. So können die Listen 56 mittels eines Druckers 60 ausgedruckt werden, um Listen 62 in Papierform zu erzeugen. Die Liste 62 in Papierform kann zusammen mit den zugehörigen Papierdokumenten 28 auf herkömmlichem Weg an ein Handelsregister übermittelt werden, damit dieses aktualisiert werden kann.

Die elektronischen Listen 56 lassen sich ferner zum automatischen Abgleich mit einem aktualisierten elektronischen Handelsregister verwenden, auf das über ein Kommunikationsnetzwerk zugegriffen werden kann. Hierzu wird überprüft, ob für die Einträge auf den elektronischen Listen 56 korrespondierende Einträge bzw. Änderungen im elektronischen Handelsregister festgestellt werden. Beim Fehlen von Einträgen oder Aktualisierungen werden automatisch Fehlermeldungen erzeugt.

Bisher wurden das Erzeugen der Dokumente 28 in Papierform einerseits und das Erzeugen und Verarbeiten von Unterschriftsdateien 48 andererseits als getrennte Vorgänge dargestellt. Die beiden Vorgänge können jedoch durch eine geeignete Zeit- und Ablaufsteuerung miteinander gekoppelt werden. Diese Kopplung wird nachfolgend unter Bezugnahme auf die Figuren 5A bis 5C näher erläutert.

### Kopplung der Vorgänge von Dokumenterzeuguna und Dateierzeugung

Die Figuren 5A bis 5C zeigen Ablaufdiagramme 500, 520 und 540 dreier Ablauf- und Zeitsteuervorgänge, welche asynchron und unabhängig voneinander ablaufen. Diese drei Vorgänge koppeln das unter Bezugnahme auf Fig. 1 erläuterte Erzeugen von Dokumenten in Papierform mit dem in Fig. 3 dargestellten Erzeugen und Verarbeiten von Unterschriftsdateien.

Wie in dem Ablaufdiagramm 500 veranschaulicht, werden für jedes vom Anwendungsserver 12 über das Kommunikationsnetzwerk 22 gesendete elektronische Dokument 8 die diesem elektronischen Dokument 8 zugeordnete Datensatzkennung dᵢ sowie der Absendezeitpunkt t_{absende,i} als neuer Eintrag nᵢ in eine elektronische Liste eingetragen. Dieser Vorgang wird für sämtliche über das Kommunikationsnetzwerk 22 gesendete Dokumente 8 durchgeführt. Auf die solchermaßen erzeugte elektronische Liste haben sowohl der Anwendungsserver 12 als auch der Computer 46 Zugriff.

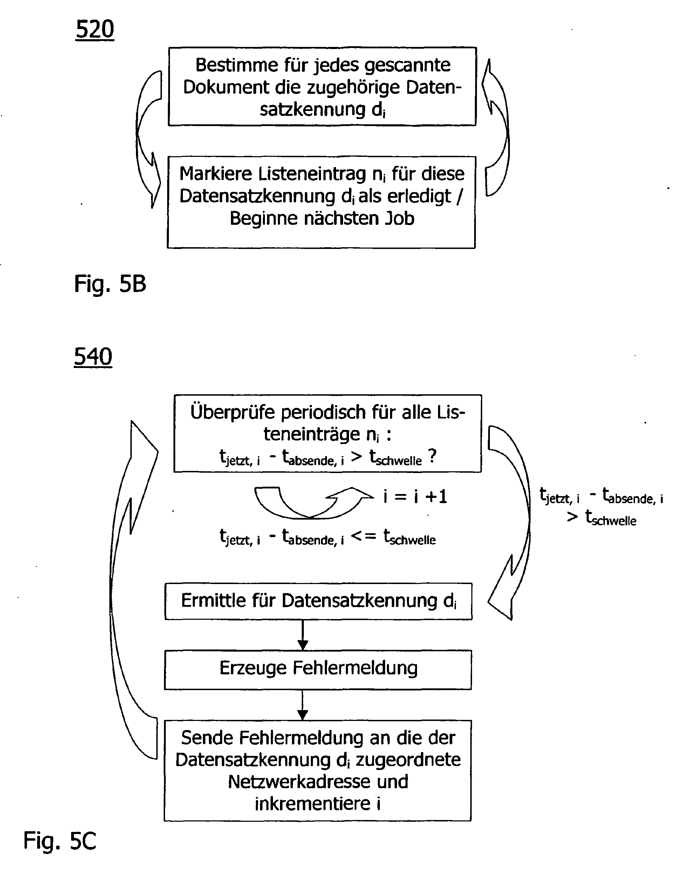

Wie in dem Ablaufdiagramm 520 gemäß Fig. 5B veranschaulicht, wird für jedes unter Verwendung des Scanners 44 eingescannte Dokument 28 vom Rechner 46 die zugehörige Datensatzkennung dᵢ ermittelt. Im Anschluss an die Ermittlung der Datensatzkennung dᵢ wird der Listeneintrag nᵢ für diese Datensatzkennung dᵢ als erledigt markiert und/oder es wird mit dem nächsten Verarbeitungs-Job begonnen. Dies geschieht asynchron bezüglich des Erzeugens neuer Listeneinträge durch den Anwendungsserver 12.

Asynchron bezüglich dieser beiden Vorgänge läuft der im Ablaufdiagramm 540 gemäß Fig. 5C veranschaulichte Vorgang ab. Dieser Vorgang erzeugt automatisch Fehlermeldungen, wenn innerhalb eines vordefinierten Zeitraums t_{schwelle} nach dem Absendezeitpunkt t_{absende} eines elektronischen Dokuments 8 keine korrespondierende Unterschriftsdatei 48 erzeugt werden kann. Der Anwendungsserver 12, der Computer 46 oder ein anderer Rechner überprüft hierzu die einzelnen Einträge auf der vom Anwendungsserver 12 gemäß dem Ablaufdiagramm 500 erzeugten Liste dahingehend, ob die zeitliche Differenz zwischen dem aktuellen Zeitpunkt t_{jetzt} und dem Absendezeitpunkt t_{absende} für einen Listeneintrag nᵢ den Schwellenwert t_{schwelle} übersteigt. Sofern dies nicht der Fall ist, wird i inkrementiert und der nächste Listeneintrag nᵢ entsprechend überprüft. Ist für einen bestimmten Listeneintrag n; der Schwellenwert t_{schwelle} hingegen überschritten, wird die entsprechende Datensatzkennung dᵢ ermittelt, eine Fehlermeldung erzeugt und diese Fehlermeldung an die der ermittelten Datensatzkennung dᵢ zugeordneten Netzwerkadresse gesendet. Anschließend wird i inkrementiert und der nächste Listeneintrag entsprechend überprüft.

Die unter Bezugnahme auf die Figuren 5A bis 5C erläuterte Ablauf- und Zeitsteuerung gewährleistet daher, dass sowohl technische Fehler (wie eine fehlerhafte oder nicht erfolgte Übermittlung elektronischer Dokumente oder eine fehlerhafte Interpretation eingescannter Steuerungsinformationen) als auch anderweitige Fehler (wie das Vergessen oder Unterlassen des Zurückreichens unterzeichneter Dokumente 28) automatisch und zuverlässig erkannt und behoben werden können.

Ingesamt gestattet die Erfindung aufgrund ihres Automatisierungsgrads und der ausgeklügelten Steuermechanismen eine wesentlich einfachere, schnellere und zuverlässigere Erzeugung und Verarbeitung von Unterschriftsdateien. Hierzu trägt insbesondere das Vorsehen von Steuerungsinformationen auf den Dokumenten, auf denen die Unterschriften zu leisten sind, bei. Die Steuerungsinformationen werden automatisch erzeugt und gestatten eine effiziente Steuerung der sich an das Einscannen der Dokumente anschließenden Verarbeitungsschritte. Während beispielsweise früher aufgrund der Vielzahl manueller Schritte die Erzeugung eines elektronischen Dokuments 8 (Fig. 1) 30 Minuten in Anspruch nahm, können nunmehr aufgrund der erfindungsgemäßen Mechanismen pro Minute 12 und mehr elektronische Dokumente 8 erstellt und versandt werden. In vergleichbarer Weise beschleunigt wurde das Erzeugen und Verarbeiten der Unterschriftsdateien 48 (Fig. 3).

Obwohl die Erfindung in den Ausführungsbeispielen unter Bezugnahme auf bevorzugte Anwendungsgebiete erläutert wurde, ist die Erfindung nicht auf diese Anwendungsgebiete beschränkt. Sie kann vielmehr überall dort zum Einsatz gelangen, wo eine elektronische Verarbeitung persönlicher Unterschriften erforderlich ist.

## Patentansprüche

1. Computer-implementiertes Verfahren zum automatischen Erzeugen und Verarbeiten von Unterschriftsdateien (48) für ein elektronisches Unterschriftenverzeichnis (50), enthaltend die Schritte:
- Bereitstellen einer Mehrzahl unterschiedlicher Dokumentvorlagen (20), denen jeweils eine Dokumentkennung (vᵢ) zugeordnet ist;
- Durchsuchen von in einer Datenbank (14) enthaltenen Datensätzen (16) nach Statusänderungen, wobei den Datensätzen (16) jeweils eine Datensatzkennung (38) zugeordnet ist;
- automatisches Auswählen einer Dokumentvorlage (20) für ein zu erzeugendes Dokument in Abhängigkeit von der festgestellten Statusänderung;
- datensatzweises Erzeugen von Steuerungsinformationen (30) in Abhängigkeit von den festgestellten Statusänderungen, wobei die für einen bestimmten Datensatz (16) erzeugten Steuerungsinformationen (30) die dem Datensatz (16) zugeordnete Datensatzkennung (38) und die Dokumentkennung (vᵢ) der ausgewählten Dokumentvorlage (20) umfassen;
- Erzeugen einer Vielzahl von Dokumenten (8) in elektronischer Form, welche die erzeugten Steuerungsinformationen (30) enthalten, wobei ein oder mehrere Dokumente pro festgestellter Statusänderung erzeugt werden;
- Bereitstellen einer Vielzahl von Dokumenten (28) in Papierform als Ausdruck der elektronischen Dokumente (8), wobei jedes ausgedruckte Dokument (28) einen für eine persönliche Unterschrift (34) vorgesehenen Bereich (36) sowie die der Unterschrift (34) zugeordneten Steuerungsinformationen (30) zum Steuern der Verarbeitung der Unterschriftsdateien (48) beinhaltet;
- Einscannen der Vielzahl von Dokumenten (28) nachdem die persönliche Unterschrift (34) geleistet wurde, wobei für jedes Dokument (28) wenigstens eine Unterschriftsdatei (48) erzeugt wird, welche die persönliche Unterschrift (34) in Form von Grafikdaten sowie eine Repräsentation der zugeordneten Steuerungsinformationen (30) enthält;
- dokumentweises Interpretieren der die Steuerungsinformationen (30) ' umfassenden Repräsentation zum Ermitteln der Datensatzkennung (38) und der Dokumentkennung (vᵢ); und
- dokumentweises Verarbeiten der Unterschriftsdatei (48) in Abhängigkeit der zugeordneten Steuerungsinformationen (30) einschließlich der Schritte:
i. Ergänzen der die persönliche Unterschrift (34) repräsentierenden Grafikdaten um personenbezogene Daten aus dem der Datensatzkennung (38) zugeordneten Datensatz (16) der Datenbank (14); und
ii. Überführen der Grafikdaten zusammen mit den personenbezogenen Daten in das durch die Dokumentkennung (vᵢ) bezeichnete elektronische Unterschriftenverzeichnis (50),
- Zugreifen auf das Unter schriftenverzeichmis (50) zum Zweck des automatischen Unleschriftenvergleichs.

2. Verfahren nach Anspruch 1, **dadurch gekennzeichnet,**
**dass** es sich bei den Steuerungsinformationen um einen Steuerungscode (30), insbesondere um einen Strichcode, handelt.

3. Verfahren nach Anspruch 1 oder 2, **dadurch gekennzeichnet,**
**dass** das Einscannen in einem Stapelverarbeitungsvorgang durchgeführt wird.

4. Verfahren nach einem der Ansprüche 1 bis 3, ferner enthaltend den Schritt:
- dokumentweises Identifizieren der in einer Unterschriftsdatei (48) enthaltenen Repräsentation der Steuerungsinformationen (30).

5. Verfahren nach einem der Ansprüche 1 bis 4, **dadurch gekennzeichnet, dass** der Schritt des Verarbeitens ein Abspeichern der Unterschriftsdateien (48) unter einem aus den Steuerungsinformationen (30) abgeleiteten Dateinamen beinhaltet.

6. Verfahren nach einem der Ansprüche 1 bis 5, **dadurch gekennzeichnet, dass** die Unterschriftsdateien (48) nach dem Einscannen zunächst temporär in einem Zwischenspeicher (49) abgespeichert werden und nach dem Interpretieren der jeweils zugeordneten Steuerungsinformationen (30) an einem aus den jeweiligen Steuerungsinformationen (30) abgeleiteten Speicherort (50) abgespeichert werden.

7. Verfahren nach einem der Ansprüche 1 bis 6, **dadurch gekennzeichnet, dass** der Schritt des Verarbeitens ein Sortieren der Unterschriftsdateien (48) in Abhängigkeit von den jeweils zugeordneten Steuerungsinformationen (30) beinhaltet.

8. Verfahren nach Anspruch 1, **dadurch gekennzeichnet,**
**dass** die Unterschriftsdateien (48) in Abhängigkeit von der Dokumentkennung (vᵢ) sortiert werden.

9. Verfahren nach einem der Ansprüche 1 bis 8, **dadurch gekennzeichnet, dass** es sich bei den Datensatzkennungen (dᵢ) um eindeutige, personenbezogene Nummern handelt.

10. Verfahren nach einem der Ansprüche 1 bis 9, ferner enthaltend die Schritte:
- Auslesen von Daten aus Datensätzen (16), deren Datensatzkennungen (38) anhand der Steuerungsinformationen (30) ermittelt wurden; und
- Erzeugen von Listen (56) unter Verwendung der ausgelesenen Daten.

11. Verfahren nach einem der Ansprüche 1 bis 10, **dadurch gekennzeichnet,**
**dass** die Unterschriftsdateien (48) oder deren Inhalte in Form des elektronischen Unterschriftenverzeichnisses (50) auf einem zentralen Server bereitgestellt werden, auf den eine Vielzahl von Netzwerkkomponenten (52) über ein Kommunikationsnetzwerk (54) Zugriff besitzt.

12. Verfahren nach einem der Ansprüche 1 bis 11, **dadurch gekennzeichnet,**
**dass** den Datensätzen (16) jeweils eine Netzwerkadresse zugeordnet ist und die erzeugten elektronischen Dokumente (8) über ein Kommunikationsnetzwerk (22) an die jeweils zugehörige Netzwerkadresse gesendet werden.

13. Verfahren nach Anspruch 12, ferner enthaltend die Unterschritte:
- Abspeichern der einem gesendeten elektronischem Dokument (8) zugehörigen Datensatzkennung (dᵢ) sowie eines Sendezeitpunkts (t_{absende}); und
- Vergleichen der in den Steuerungsinformationen (30) eines eingescannten Dokuments (28) enthaltenen Datensatzkennung (dᵢ) mit den abgespeicherten Datensatzkennungen.

14. Verfahren nach Anspruch 13, ferner enthaltend die Schritte:
- Erzeugen einer Fehlermeldung, wenn für eine abgespeicherte Datensatzkennung (dᵢ) innerhalb eines vordefinierten Zeitraums ab dem Sendezeitpunkt (t_{absende}) kein dieser Datensatzkennung (dᵢ) zugehöriges eingescanntes Dokument erkannt wird; und/oder
- Löschen der abgespeicherten Datensatzkennung (dᵢ) und/oder des zugehörigen Sendezeitpunkts (t_{absende}), wenn ein dieser Datensatzkennung (dᵢ) zugehöriges eingescanntes Dokument erkannt wird.

15. Verfahren nach einem der Ansprüche 12 bis 14, ferner enthaltend die Schritte:
- Empfangen des elektronischen Dokuments (8) über das Kommunikationsnetzwerk (22); und
- Ausdrucken des empfangenen elektronischen Dokuments (8) zur Erzeugung eines Dokuments (28) in Papierform, wobei das erzeugte Dokument (28) die Steuerungsinformationen (30) und einen für eine persönliche Unterschrift (34) vorgesehenen Bereich (36) beinhaltet.

16. Computerprogrammprodukt mit Programmcodemitteln zum Ausführen der Schritte eines der Ansprüche 1 bis 15, wenn das Computerprogrammprodukt auf einem oder mehreren Computern ausgeführt wird.

17. Computerprogrammprodukt nach Anspruch 16, gespeichert auf einem computerlesbaren Speichermedium.

18. Computersystem (42) zum automatischen Erzeugen und Verarbeiten von Unterschriftsdateien (48) für ein elektronisches Unterschriftenverzeichnis (50), enthaltend:
- ein Verzeichnis (18) mit einer Mehrzahl unterschiedlicher Dokumentvorlagen (20), denen jeweils eine Dokumentkennung (vᵢ) zugeordnet ist;
- eine Datensätzen (16) enthaltende Datenbank (14) zum Durchsuchen der Datensätze (16) nach Statusänderungen, wobei den Datensätzen (16) jeweils eine Datensatzkennung (38) zugeordnet ist;
- einen Anwendungsserver (12) zum automatischen Auswählen einer Dokumentvorlage (20) für ein zu erzeugendes Dokument in Abhängigkeit von der festgestellten Statusänderung, zum datensatzweisen Erzeugen von Steuerungsinformationen (30) in Abhängigkeit von den festgestellten Statusänderungen, wobei die für einen bestimmten Datensatz (16) erzeugten Steuerungsinformationen (30) die dem Datensatz (16) zugeordnete Datensatzkennung (38) und die Dokumentkennung (vᵢ) der ausgewählten Dokumentvorlage (20) umfassen, und zum Erzeugen einer Vielzahl von Dokumenten (8) in elektronischer Form, welche die erzeugten Steuerungsinformationen (30) enthalten, wobei ein oder mehrere Dokumente pro festgestellter Statusänderung erzeugt werden;
- einen Scanner (44) mit Mehrblatt-Einzug zur Aufnahme einer Vielzahl von Dokumenten (28) in Papierform als Ausdruck der elektronischen Dokumente (8), wobei jedes ausgedruckte Dokument (28) einen für eine persönliche Unterschrift (34) vorgesehenen Bereich (36) sowie die der Unterschrift (34) zugeordneten Steuerungsinformationen (30) zum Steuern der Verarbeitung der Unterschriftsdateien (48) beinhaltet; und
- einen mit dem Scanner (44) gekoppelten Computer (46), der nachdem die persönliche Unterschrift (34) geleistet wurde für jedes eingescannte Dokument (28) wenigstens eine Unterschriftsdatei (48) erzeugt, welche die persönliche Unterschrift (34) in Form von Grafikdaten sowie eine Repräsentation der zugeordneten Steuerungsinformationen (30) enthält, wobei der Computer (46) programmiert ist zum dokumentweisen Interpretieren der die Steuerungsinformationen (30) umfassende Repräsentation zum Ermitteln der Datensatzkennung (38) und der Dokumentkennung (vᵢ) und zum dokumentweisen Verarbeiten der Unterschriftsdatei (48) in Abhängigkeit der zugeordneten Steuerungsinformationen (30), wobei zum dokumentweisen Verarbeiten
i. Mittel zum Ergänzen der die persönliche Unterschrift (34) repräsentierenden Grafikdaten um personenbezogene Daten aus dem der Datensatzkennung (38) zugeordneten Datensatz (16) der Datenbank (14); und
ii. Mittel zum Überführen der Grafikdaten zusammen mit den personenbezogenen Daten in das durch die Dokumentkennung (vᵢ) bezeichnete elektronische Unterschriftenverzeichnis (50) vorgesehen sind ;
- Netzwerk komponenten (52), die zum Zugriff auf das elektronische Unterschriftenverzeichnis (50) für den automatischen Unter schriftenvergleich ausgebilded sind.

## Claims

1. A computer-implemented method of automatically generating and processing signature files (48) for an electronic signature list (50), comprising the steps of:
- providing a plurality of different document templates (20) to each of which a document identifier (vᵢ) is assigned;
- searching data records (16), which are included in a data base (14), for status changes, wherein a data record identifier (38) is assigned to each of the data records (16);
- automatically selecting a document template (20) for a document to be generated depending on the determined status change;
- document-wise generation of control information (30) depending on the determined status changes, wherein the control information (30) generated for a specific data record (16) includes the data record identifier (38) assigned to the data record (16) and the document identifier (vᵢ) of the selected document template (20);
- generating, in electronic form, a plurality of documents (8), which include the generated control information (30), wherein one or more documents are generated for each determined status change;
- providing a plurality of documents (28) in paper form as a printout of the electronic documents (8), wherein each of the printed documents (28) comprises a region (36) provided for a personal signature (34) as well as the control information (30) assigned to the signature (34) for controlling the processing of the signature files (48);
- scanning-in the plurality of documents (28) after executing the personal signature (34), wherein at least one signature file (48), which includes the personal signature (34) in form of graphic data as well as a representation of the assigned control information (30), is generated for each of the documents (28);
- document-wise interpretation of the representation including the control information (30) for determining the data record identifier (38) and the document identifier (vᵢ); and
- document-wise processing of the signature file (48) depending on the assigned control information (30), including the steps of:
i. supplementing the graphic data representing the personal signature (34) with individual-related data from the data record (16), which is assigned to the data record identifier (38), of the data base (14); and
ii. transferring the graphic data together with the individual-related data into the electronic signature list (50) designated by the document identifier (vᵢ),
- accessing the signature list (50) for the purpose of automated signature comparison.

2. The method of claim 1, **characterized in that** the control information is a control code, in particular a barcode.

3. The method according to claim 1 or 2, **characterized in that** the scanning-in is performed in a batch processing operation.

4. The method of any one of claims 1 to 3, further comprising the step of:
- document-wise identification of the representation of the control information (30) included in the signature file (48).

5. The method of any one of the claims 1 to 4, **characterized in that** the step of processing includes a storing of the signature files (48) using a file name derived from the control information (30).

6. The method of any one of claims 1 to 5, **characterized in that** the signature files (48) are first temporarily stored in a temporary memory (49) after scanning-in and are stored at a memory location (50) derived from the respective control information (30) after the interpretation of the respectively assigned control information (30).

7. The method of any one of the claims 1 to 6, **characterized in that** the step of processing includes sorting the signature files (48) depending on the respectively assigned control information (30).

8. The method of claim 7, **characterized in that** the signature files (48) are sorted depending on the document identifier (vᵢ).

9. The method of any one of the claims 1 to 8, **characterized in that** the data record identifier (dᵢ) is a unique individual-related number.

10. The method of any one of the claims 1 to 9, further comprising the steps of:
- reading out data from data records (16), the data record identifiers (38) of which have been determined on the basis of the control information (30); and
- generating lists (56) using the read data.

11. The method of any one of the claims 1 to 10, **characterized in that** the signature files (48) or their contents are provided in form of the electronic signature list (50) on a central server to which a plurality of network components (52) have access via a communications network (54).

12. The method of any one of the claims 1 to 11, **characterized in that** a network address is assigned to each of the data records (16) and the generated electronic documents (8) are sent to the respectively associated network address via a communications network (22).

13. The method of claim 12, further comprising the substeps of:
- storing the data record identifier (dᵢ) associated with a sent electronic document (8) as well as a sending time (t_{absende}); and
- comparing the data record identifier (dᵢ) included in the control information (30) of a scanned-in document (28) with the stored data record identifiers.

14. The method of claim 13, further comprising the steps:
- generating an error signal, if for a stored data record identifier (dᵢ) no scanned-in document associated with the data record identifier (dᵢ) is recognized within a predefined time interval from the sending time (t_{absende}); and/or
- deleting of the stored data record identifier (dᵢ) and/or of the associated sending time (t_{absende}), if a scanned-in document associated to this data record identifier (dᵢ) is recognized.

15. The method of any one of the claims 12 to 14, further comprising the steps of:
- receiving the electronic document (8) via the communications network (22); and
- printing out the received electronic document (8) for generating a document (28) in paper form, wherein the generated document (28) includes the control information (30) and a region (36) provided for a personal signature (34).

16. Computer program product including program code means for executing the steps of any one of the claims 1 to 15 when the computer program product is executed on one or more computing devices.

17. The computer program product of claim 16, stored on a computer readable recording medium.

18. A computer system for automatically generating and processing signature files (48) for an electronic signature list (50), comprising:
- a list (18) including a plurality of different document templates (20) to each of which a document identifier (vᵢ) is assigned;
- a data base (14) including data records (16) adapted to search the data records (16) for status changes, wherein a data record identifier (38) is assigned to each of the data records (16);
- an application server (12) adapted to automatically select a document template (20) for a document to be generated depending on the determined status change, to generate in a document-wise manner control information (30) depending on the determined status changes, wherein the control information (30) generated for a specific data record (16) includes the data record identifier (38) assigned to the data record (16) and the document identifier (vᵢ) of the selected document template (20), and to generate, in electronic form, a plurality of documents (8), which include the generated control information (30), wherein one or more documents are generated for each determined status change;
- a scanner (44) with multi-sheet feed adapted to receive a plurality of documents (28) in paper form as a printout of the electronic documents (8), wherein each of the printed documents (28) comprises a region (36) provided for a personal signature (34) as well as the control information (30) assigned to the signature (34) for controlling the processing of the signature files (48);
- a computer (46) coupled to the scanner (44) and adapted to generated for each of the scanned-in documents (28) after executing the personal signature (34) at least one signature file (48), which includes the personal signature (34) in form of graphic data as well as a representation of the assigned control information (30), wherein the computer (46) is programmed to interpret in a document-wise manner the representation including the control information (30) for determining the data record identifier (38) and the document identifier (vᵢ), and to process in a document-wise manner the signature file (48) depending on the assigned control information (30), wherein for the document-wise processing
i. means for supplementing the graphic data representing the personal signature (34) with individual-related data from the data record (16), which is assigned to the data record identifier (38), of the data base (14); and
ii. means for transferring the graphic data together with the individual-related data into the electronic signature list (50) designated by the document identifier (vᵢ), are provided;
- a network component (52) adapted to access the signature list (50) for automated signature comparison.

## Revendications

1. Procédé implémenté par ordinateur pour créer et traiter automatiquement des fichiers de signature (48) pour un répertoire de signatures électronique (50), comportant pour étapes :
- la fourniture d'une pluralité de modèles de document (20) différents, auxquels est respectivement attribué un code d'identification de document (vᵢ);
- l'exploration de jeux de données (16) contenus dans une base de données (14) après modifications d'état, un code d'identification de jeu de données (38) étant respectivement attribué auxdits jeux de données (16) ;
- la sélection automatique d'un modèle de document (20) pour un document à générer en fonction de la modification d'état constatée ;
- la production de données de commande (30) par jeu de données en fonction des modifications d'état constatées, les données de commande générées (30) pour un jeu de données (16) déterminé comportant le code d'identification de jeu de données (38) attribué au jeu de données (16) et le code d'identification de document (vᵢ) du modèle de document (20) sélectionné ;
- la production d'un grand nombre de documents (8) sous forme électronique, lesquels comportent les données de commande (30) générées, un ou plusieurs documents étant générés pour chaque modification d'état constatée ;
- la fourniture d'un grand nombre de documents (28) sous forme papier en tant que versions imprimées des documents électroniques (8), chacun de ces documents imprimés (28) comportant une zone (36) destinée à recevoir une signature personnelle (34) ainsi que les données de commande (30) attribuées à la signature (34) pour commander le traitement des fichiers de signature (48) ;
- le scannage d'un grand nombre de documents (28) après apposition de ladite signature personnelle (34), au moins un fichier de signature (48) contenant la signature personnelle (34) sous forme de données graphiques ainsi qu'une représentation des données de commande (30) attribuées ayant été créé pour chacun des documents (28) ;
- l'interprétation par document de la représentation contenant les données de commande (30) pour identifier le code d'identification de jeu de données (38) et le code d'identification de document (vᵢ) ; et
- le traitement par document du fichier de signature (48) en fonction des données de commande (30) attribuées, y compris les étapes suivantes :
i. le rajout de données personnelles issues du jeu de données (16) attribué au code d'identification de jeu de données (38) et mémorisé dans la base de données (14) pour compléter les données graphiques représentant la signature personnelle (34) ; et
ii. le transfert des données graphiques conjointement avec les données personnelles dans le répertoire des signatures électronique (50) désigné par le code d'identification de document (vᵢ),
- l'accès au répertoire de signatures (50) aux fins de comparaison automatique des signatures.

2. Procédé selon la revendication 1, **caractérisé en ce que** les données de commande se présentent sous la forme d'un code de commande (30), en particulier d'un code à barres.

3. Procédé selon la revendication 1 ou 2, **caractérisé en ce que** le scannage est réalisé dans le cadre d'un processus de traitement de piles.

4. Procédé selon l'une des revendications 1 à 3, comportant en outre pour étape :
- l'identification par document de la représentation des données de commande (30) contenue dans un fichier de signature (48).

5. Procédé selon l'une des revendications 1 à 4, **caractérisé en ce que** l'étape du traitement comporte une sauvegarde des fichiers de signature (48) sous un nom de fichier dérivé des données de commande (30).

6. Procédé selon l'une des revendications 1 à 5, **caractérisé en ce que** les fichiers de signature (48) sont, après scannage, tout d'abord sauvegardés temporairement dans une mémoire intermédiaire (49) pour être, après interprétation des données de commande (30) respectivement attribuées, sauvegardées en un lieu de sauvegarde (50) dérivé des données de commande (30) correspondantes.

7. Procédé selon l'une des revendications 1 à 6, **caractérisé en ce que** l'étape du traitement comporte un classement des fichiers de signature (48) en fonction des données de commande (30) respectivement attribuées.

8. Procédé selon la revendication 1, **caractérisé en ce que** les fichiers de signature (48) sont classés en fonction du code d'identification de document (vᵢ).

9. Procédé selon l'une des revendications 1 à 8, **caractérisé en ce que** les codes d'identification de jeu de données (dᵢ) consistent en des numéros univoques relatifs aux personnes.

10. Procédé selon l'une des revendications 1 à 9, comportant en outre pour étapes :
- la lecture de données provenant des jeux de données (16) dont les codes d'identification de jeu de données (38) ont été identifiés à l'aide des données de commande (30) ; et
- la création de listes (56) à partir des données lues et utilisées.

11. Procédé selon l'une des revendications 1 à 10, **caractérisé en ce que** les fichiers de signature (48) ou leurs contenus sont délivrés sous forme de répertoire de signatures électronique (50) sur un serveur central, auquel de nombreux composants de réseau (52) ont accès via un réseau de communication (54).

12. Procédé selon l'une des revendications 1 à 11, **caractérisé en ce que** une adresse de réseau est respectivement attribuée aux jeux de données (16) et que les documents électroniques (8) générés sont respectivement transmis via un réseau de communication (22) à l'adresse de réseau correspondante.

13. Procédé selon la revendication 12, comportant en outre pour sous-étapes :
- la sauvegarde du code d'identification de jeu de données (dᵢ) correspondant à un document électronique (8) transmis et de l'heure d'envoi (t_{absende}) ; et
- la comparaison du code d'identification de jeu de données (dᵢ) contenu dans les données de commande (30) d'un document (28) scanné avec les codes d'identification de jeu de données sauvegardés.

14. Procédé selon la revendication 13, comportant en outre pour étapes :
- la production d'un message d'erreur lorsque pour un code d'identification de jeu de données sauvegardé (dᵢ), aucun document scanné ne correspond à ce code d'identification de jeu de données, pendant une période prédéfinie à partir de l'heure d'envoi ; et/ou
- la suppression du code d'identification de jeu de données sauvegardé (dᵢ) et/ou de l'heure d'envoi (t_{absende}) correspondante lorsqu'est reconnu un document scanné correspondant à ce code d'identification de jeu de données (dᵢ).

15. Procédé selon l'une des revendications 12 à 14, comportant en outre pour étapes :
- la réception du document électronique (8) transmis via le réseau de communication (22) ; et
- l'impression du document électronique (8) reçu pour générer un document (28) sous forme papier, le document généré (28) contenant les données de commande (30) et une zone (36) destinée à recevoir une signature personnelle (34).

16. Produit de programme informatique avec des moyens de code de programme pour mettre en oeuvre les étapes d'une des revendications 1 à 15 lorsque le produit de programme informatique tourne sur un ou plusieurs ordinateurs.

17. Produit de programme informatique selon la revendication 16, enregistré sur un support d'enregistrement lisible par ordinateur.

18. Système informatique (42) pour créer et traiter automatiquement des fichiers de signature (48) pour un répertoire de signatures électronique (50), comprenant :
un répertoire (18) contenant une pluralité de modèles de document (20) différents, auxquels est respectivement attribué un code d'identification de document (vᵢ) ;
- une base de données (14) contenant des jeux de données (16) en vue de l'exploration des jeux de données (16) après modifications d'état, un code d'identification de jeu de données (38) étant respectivement attribué aux jeux de données (16) ;
- un serveur d'application (12) pour la sélection automatique d'un modèle de document (20) pour un document à générer en fonction de la modification d'état constatée, pour la production par jeu de données de données de commande (30) en fonction des modifications d'état constatées, les données de commande (30) générées pour un jeu de données (16) déterminé comportant le code d'identification de jeu de données (38) attribué au jeu de données (16) et le code d'identification de document (vᵢ) du modèle de document (20) sélectionné, et pour la production d'un grand nombre de documents (8) sous forme électronique, lesquels comportent les données de commande (30) générées, un ou plusieurs documents étant générés pour chaque modification d'état constatée ;
- un scanner (44) équipé d'un passe-copie multi-feuilles pour loger un grand nombre de documents (28) sous forme papier en tant que versions imprimées des documents électroniques (8), chacun de ces documents imprimés (28) comportant une zone (36) destinée à recevoir une signature personnelle (34) ainsi que les données de commande (30) attribuées à la signature (34) pour commander le traitement des fichiers de signature (48) ; et
- un ordinateur (46) couplé audit scanner (44) qui, après apposition de la signature personnelle (34), crée pour chaque document (28) scanné au moins un fichier de signature (48) contenant la signature personnelle (34) sous forme de données graphiques et une représentation des données de commande (30) attribuées, ledit ordinateur (46) étant programmé pour interpréter document par document la représentation comprenant les données de commande (30) pour identifier le code d'identification de jeu de données (38) et du code d'identification de document (vᵢ), et pour traiter document par document le fichier de signature (48) en fonction des données de commande (30) attribuées, le traitement document par document nécessitant la prévision
i. de moyens permettant le rajout de données personnelles issues du jeu de données (16) attribué au code d'identification de jeu de données (38) et mémorisé dans la base de données (14) pour compléter les données graphiques représentant la signature personnelle (34) ; et
ii. de moyens permettant le transfert des données graphiques conjointement avec les données personnelles dans le répertoire des signatures électronique (50) désigné par le code d'identification de document (vᵢ).
- des composants de réseau (52) conçus pour permettre l'accès au répertoire de signatures (50) électronique aux fins de comparaison automatique des signatures.
